# EUROPÄISCHE PATENTSCHRIFT

(11) **EP 3 525 569 B1**
(45) Veröffentlichungstag und Bekanntmachung des Hinweises auf die Patenterteilung: **02.06.2021**
(21) Anmeldenummer: 17797241.1
(22) Anmeldetag: 16.10.2017
(51) Int. Cl.: A01D 33/08, A01D 17/10

(54) **HACKFRUCHTERNTER**
ROOT CROP HARVESTER
MACHINE DE RÉCOLTE DE TUBERCULES

(30) Priorität: 14.10.2016 DE 102016012245
(43) Veröffentlichungstag der Anmeldung: 21.08.2019
(73) Patentinhaber: Grimme Landmaschinenfabrik GmbH & Co. KG, 49401 Damme (DE)
(72) Erfinder: NIEHUES, Christoph, 49393 Lohne (DE); PÖHLKING, Alfons, 49439 Steinfeld (DE)
(74) Vertreter: Wischmeyer, André
(86) Internationale Anmeldenummer: PCT/EP2017/076371
(87) Internationale Veröffentlichungsnummer: WO 2018/069551

(56) Entgegenhaltungen:
- DE-A1- 19 524 145
- DE-A1-102007 034 446

## Beschreibung

Die Erfindung betrifft einen Hackfruchternter in Form einer Kartoffelerntemaschine gemäß dem Oberbegriff des Anspruchs 1.

Kartoffelerntemaschinen werden in Form sogenannter Vollerntemaschinen seit langem eingesetzt, wobei selbstfahrende und gezogene Ausführungen von Vollerntemaschinen bekannt sind. Bei einer gezogenen Maschine gemäß DE 93 20 575.9 U1 wird ein von einer Rodevorrichtung vom Acker aufgenommenes Gemisch aus Erntegut und Kluten über mehrere Siebförderbänder einer oberen Steintrennvorrichtung übergeben. Hier wird mit einem Fingerband oder rotierenden Bürsten eine Weiterleitung des Erntegutes zu einem Verleseband hin gesteuert.

Auch bei einer Lösung gemäß DE 195 24 145 A1 ist eine ähnliche Stein- und Klutentrennvorrichtung in das System integriert, so dass das Erntegut einen weitgehend von Beimengungen freien Strom bildet. Bei einem Vorschlag gemäß DE 20 2013 102 558 U1 wird zur Gemischführung und Sortierung der Bestandteile ein mehrlagiges System im Bereich eines Erdklumpenbandes genutzt, wobei zur Abnahme der ein Gemisch enthaltenden Verunreinigungen jeweilige Rollen oder Bürsten vorgesehen sind.

Bei einer seit langem am Markt befindlichen Kartoffelerntemaschine (Grimme Landmaschinenfabrik GmbH & Co. KG, Firmenprospekt SE150/170/60, 01/08/4000) wird in einer Sortierzone des Fördersystems ein in das vorgereinigte Gemisch eingreifendes Trenngerät angeordnet. Dieses weist im Bereich eines als Platten- oder Stabband ausgebildeten Abstreifsystems jeweilige Abstreifelemente in Form von Mitnahmefingern oder Igelkonturen auf. Dabei sind zumindest zwei dieser Abstreifsysteme in Förderrichtung des Zuführbandes hintereinander angeordnet, so dass die Abstreifelemente zwei gleichebenig nebeneinander angeordnete Abstreifebenen bilden, die nacheinander über dem Zuführband auf das herangeführte Gemisch wirken.

Damit wird in der Sortierzone eine mehrphasige Querverlagerung von Teilen des Erntegutes möglich, und dieses kann entsprechend beimengungsfrei auf das Sortierband gelangen. Die beiden Abstreifbänder sind dabei in ihrer Geschwindigkeit einstellbar. Konstruktionsbedingt ist jedoch nur die gemeinsame Verstellung beider Abstreifbänder möglich, so dass bei schnell wechselnden, unterschiedlichen Erntebedingungen der Anteil an ungewollt auf das Sortierband gelangenden Beimengungen nachteilig hoch sein kann. Eine entsprechende Ausführung des Trenngerätes ist auch bei der gattungsbildenden Konstruktion der Kartoffelerntemaschine gemäß DE 10 2007 034 446 A1 vorgesehen.

Die Erfindung befasst sich mit dem Problem, eine mit Siebbändern arbeitende Kartoffelerntemaschine bereitzustellen, in deren Sortierzone mittels eines verbesserten Trenngerätes eine optimale Aufbereitung des Erntegemisches möglich ist.

Die Erfindung löst diese Aufgabe mit einem Hackfruchternter gemäß dem Anspruch 1. Weitere Ausgestaltungen der erfindungsgemäßen Konstruktion ergeben sich aus den Ansprüchen 2 bis 12.

Die gestellte Aufgabe wird im Hinblick auf eine für sämtliche Sortierparameter und unterschiedliche Erntebedingungen sowie bodenabhängig wechselnde Gemischstrukturen schonende und prozesssichere Sortierung durch einen Gegenstand gemäß Anspruch 1 gelöst. Vorteilhafte Ausführungen dieses Gegenstands können in Kombination mit den Merkmalen der weiteren nachbeschriebenen erfindungsgemäßen Ausführungsbeispiele sowie den auf Anspruch 1 rückbezogenen Ansprüchen entnommen werden.

Ein Hackfruchternter gemäß Anspruch 1 ist als Kartoffelerntemaschine ausgebildet, die mit einer Rodevorrichtung versehen ist, von der aus ein sowohl das Erntegut als auch Kluten, Kraut u. dgl. Beimengungen aufweisendes Gemisch in den Bereich nachgeordneter Siebbänder verlagerbar ist, dabei das auf einem der Zuführbänder aufliegende Gemisch in eine Sortierzone gelangt und in dieser Sortierzone mittels eines über dem Zuführband angeordneten sowie quer zu dessen Zuführrichtung auf das Gemisch einwirkenden Trenngerätes des Hackfruchternters das Erntegut aussortierbar ist, derart, dass zwei gleichsinnig in einer Abstreifrichtung umlaufende Abstreifbänder mittels jeweiliger Abstreifelemente das Erntegut erfassen, dieses in zwei nebeneinander angeordneten Abstreifebenen einem nachgeordneten Sortierband zuführen und dabei jeweilige als Rest auf dem Zuführband verbleibende Beimengungen in einer vorzugsweise um 90° zur Abstreifrichtung versetzten bzw. angewinkelten Leitrichtung ausleitbar sind. Weiterhin ist eine Zuführung durch die Sortierzone vom Zuführband zum Sortierband erfindungsgemäß fallstufenfrei ausgebildet. Insbesondere ist auch die Zuführung zu dem Sortierband und weiter zu einem Verlesetisch fallstufenfrei ausgebildet, wobei der Verlesetisch als Teil des Sortierbandes

oder nachgeordnet ausgebildet sein kann. Eine solche Überführung durch die Sortierzone hindurch schont das Erntegut und führt zu kontrollierten Bedingungen im Gutstrom, insbesondere bei der Sortierung des Ernteguts bzw. des Erntegut-Beimengen-Gemisches. Weiterhin ist die Länge der zumindest zwei Abstreifbänder unterschiedlich. Hierdurch lässt sich eine optimale Trennung und optimale Verteilung der Bestandteile des zugeführten Gemisches realisieren.

Eine Fallstufe gilt als dann vorhanden, wenn das Zuführband, das nachfolgende Sortierband und/oder ein etwaig zwischengeordnetes Zwischenförderband sowie insbesondere zusätzlich ein dem Sortierband nachfolgendes Verlesetischband teilweise untereinander angeordnet sind und Hackfrüchte in vertikaler Richtung zumindest im Wesentlichen schwerkraftbedingt und insbesondere im freien Fall, d.h. abschnittsweise berührungslos in Bezug auf das abgebende und empfangende Band, übergeben werden. Rutschen oder Leitbleche, würden demzufolge als Fallstufe gelten. Aktiv rotierende Überleitelemente gelten demnach nicht als Fallstufe. Eine Endbereiche der jeweiligen Bänder schräg miteinander verbindende Überleitwalze zum Beispiel zum Ausgleich unterschiedlicher Tragelementhöhen von Igelbändern zählt daher in diesem Sinne nicht als Fallstufe. Das Sortierband entspricht hierbei einem aus der Sortierzone herausführenden Band, auf welchem zumindest im Wesentlichen, vorzugsweise vollständig, nur Erntegut transportiert wird.

Vorteilhafterweise bilden das Sortierband und das zumindest eine Zuführband sowie insbesondere vorhandene Zwischenförderbänder Förderebenen aus, die vorzugsweise ineinander übergehend eine einheitliche Förderebene ausbilden und/oder deren Höhendifferenz senkrecht zur Abstreifrichtung in einer Seitenansicht betrachtet zumindest weniger als 3 cm, vorzugsweise weniger als 2 cm beträgt, wodurch die Übergabe der Hackfrüchte auf das Sortierband besonders schonend ist. Die Sortierung kann somit unter den gegebenen Umständen prozesssicherer erfolgen und die Übergabe auf das Sortierband ermöglicht eine gute Fraktionierung unterschiedlicher Größen des Ernteguts.

Als Förderebene wird hierbei eine beispielweise bei Igelbändern durch deren Spitze definierte und verlaufende Ebene betrachtet. Zumindest ist eine einheitliche Förderebene in der Regel dann gegeben, wenn die Mitnehmer bzw. die jeweiligen Hackfrüchte transportierenden Tragelemente (z.B. des Noppen- oder Igelbandes) von Sortierband und nachfolgendem Zuführband betrachtet in einer Ebene parallel zur Förderrichtung zumindest teilweise auf einer Höhe nebeneinander erstreckt liegen. Auch etwaig vorhandene Zwischenförderbänder liegen vorzugsweise auf derselben Höhe.

Insbesondere sind sämtliche in der Sortierzone vorhandenen Zuführ- und Sortierbänder sowie etwaig vorhandene Zwischenförderbänder für das Gemisch, bzw. dessen Bestandteile mit einer in der Draufsicht zumindest im Wesentlichen parallelen, d.h. sich um weniger als 10° unterscheidenden, sowie insbesondere parallelen Förderrichtung versehen, während lediglich die Abstreifbändern mit ihrer Bewegungsrichtung angewinkelt dazu stehen. Der gesamte Sortierbereich kann somit konstruktiv einfacher und gegebenenfalls schmaler sowie insbesondere auch mit die Maschinenbreite gut ausnutzenden Zuführ- und abführenden Sortierbändern versehen sein. Die Abstreifbänder überführen das weiter in Förderrichtung geförderte, zu sortierende Erntegut durch quer zur Förderrichtung aufgegebene Impulse gezielt in Richtung des Sortierbandes während insbesondere Steine weniger stark von den Abstreifbändern zur Seite gestreift werden und durch die Weiterförderung in die Förderrichtung schnell in den Endbereich des Zuführbandes oder eines etwaig zwischengeordneten Zwischenförderbandes und von dort auf einen Beimengungen abfördernden Abförderer gelangen. Dieser ist insbesondere in Förderrichtung betrachtet noch teilweise hinter dem Zuführband angeordnet und kann ebenfalls wieder dieselbe Förderrichtung aufweisen. Durch die Anordnung von Zuführband und Sortierband sowie gegebenenfalls vorhandenem Zwischenförderband mit identischer Förderrichtung direkt nebeneinander kann das Erntegut mittels der Abstreifbänder ohne Fallstufe und damit schonend auf das Sortierband übertragen werden. Direkt nebeneinander sind die Bänder insbesondere dann angeordnet, wenn sie weniger als 3 cm, noch bevorzugter weniger als 2 cm voneinander beabstandet sind sowie weiterhin vorzugsweise keinen Höhenversatz größer 3 cm aufweisen.

Eine vorteilhafte Weiterbildung der Erfindung zeichnet sich dadurch aus, dass zumindest eines der beiden Abstreifbänder in Förderrichtung vor seiner endseitigen Umlenkung einen Ausförderabschnitt aufweist, in dem dieses Abstreifband quer zur Förderrichtung betrachtet mit einer Steigung kleiner 55° gegenüber der Abstreifebene versehen ist, wobei das Abstreifband eine abschnittsweise unrunde Kontur und insbesondere konstante Steigung aufweist. Gegebenenfalls über Umlenkungsrollen oder andere zumindest kreissegmentförmige Führungen in den Ausförderabschnitt überleitende Umlenkungen sind hierbei nicht berücksichtigt.

Die Steigung der Abstreifbänder im jeweiligen Ausförderabschnitt ergibt sich durch den Winkel zwischen der Kontur bzw. gegebenenfalls bei einer gekrümmten Kontur einer Tangente an die Kontur des Zugelements des Zugelements des Abstreifbandes im Ausförderabschnitt und den Abstreifebenen, betrachtet in einer Seitenansicht quer zur Förderrichtung bzw. Abstreifrichtung des jeweiligen Abstreifbandes.

Abschnittsweise unrund bedeutet, dass in einer Seitenansicht in Richtung quer und insbesondere 90° zur Förderrichtung das Abstreifband einen angehobenen oder ansteigenden Verlauf des Untertrums aufweist, der nicht kreisbogenförmig ausgebildet ist und der noch vor der eigentlichen Umlenkung des jeweiligen Abstreifbandes für eine schonende und insbesondere geschwindigkeitsregulierte Übergabe der Hackfrüchte, insbesondere der Kartoffeln, auf das Sortierband sorgt. Insofern bezieht sich "unrund" nicht auf eine Form, die über 360° geschlossen ist.

Bis in Richtung des Endes des Abstreifbandes mit in der Sortierzone geförderte Kartoffeln befinden sich vor dem Ausförderabschnitt, in dem der Verlauf des Abstreifbandes insbesondere gradlinig ist, noch in Eingriff bzw. Kontakt mit den mehr oder wenig senkrecht stehenden Abstreifelementen des Abstreifbandes. Beispielsweise handelt es sich bei den Abstreifelementen um Abstreiffinger, die in Abstreifrichtung betrachtet hintereinander und/oder versetzt zueinander auf einem Riemen und/oder auf Querstreben des Abstreifbandes liegen können. Durch die Umlenkung des Abstreifbandes an seinem Ende erfahren die Abstreiffinger im Stand der Technik eine Beschleunigung insbesondere an deren äußersten, mit den Hackfrüchten in Kontakt stehenden Enden. Diese wirkt nachteilig auf die Hackfrüchte, was im Stand der Technik nicht selten dazu führt, dass die Hackfrüchte gegen eine seitliche Begrenzung des Sortierbandes bzw. über das Sortierband hinaus beschleunigt und gefördert werden. Dieser beschleunigte Übergabevorgang ist schlecht kontrollierbar, insbesondere dann, wenn auf dem Sortierband Größenfraktionen getrennt auflaufen sollen. Ein kürzeres Abstreifband führt allerdings dazu, dass nicht die gesamte Breite des Sortierbandes zielgerichtet ausgenutzt werden kann.

Durch die erfindungsgemäße Weiterbildung mit einem Ausförderabschnitt erfolgt eine gezieltere Ablage der von Kluten, Kraut und dergleichen Beimengungen im wesentlichen befreiten Hackfrüchte und die Übergabe auf das Prozessband erfolgt weitestgehend prozesssicher. Die Abstreifelemente werden in dem gegenüber der eigentlichen Sortierzone ansteigenden Ausförderabschnitt vorsichtiger aus den Hackfrüchten zurückgezogen, so dass sie zunehmend weniger mit den Hackfrüchten in Kontakt stehen. Ein durch die eigentliche Umlenkung ab insbesondere einer Steigung von 55° definierter Bandverlauf führt nur noch zu einem geringen oder keinem weiteren Impulseintrag auf die Hackfrüchte. Durch den Ausförderabschnitt, der einen Ausförderbereich in der Sortierzone definiert, gelangen die Hackfrüchte somit prozesssicherer und geschwindigkeitsregulierter auf das Sortierband als dies im Stand der Technik der Fall ist.

Der Hackfruchternter ist als Kartoffelerntemaschine generell mit einer Rodevorrichtung ausgebildet und weist zusätzlich nachgeordnete Siebbänder und Zuführbänder auf, die über eine Zuführrichtung das Gemisch in einer Sortierzone in den Bereich eines Trenngerätes des Hackfruchternters bringen. Das Trenngerät weist quer zur Zuführrichtung, d.h. in einem Winkel zwischen 80° und 145 ° und somit schräg bis rechtwinklig angewinkelte Abstreifbänder mit jeweiligen Abstreifelementen auf, die das ankommende Gemisch dergestalt trennen, dass auf das nachgelagert in Abstreifrichtung folgende Sortierband des Hackfruchternters die Hackfrüchte im wesentlichen beimengungenfrei überführt werden. Auf dem Zuführband oder einem in der Sortierzone vorhandenen Band verbleibende Beimengungen sind in einer im Wesentlichen parallel zur Zuführrichtung gestalteten Leitrichtung ausleitbar.

In Längsrichtung des Abstreifbandes steigt über die Länge des Ausförderabschnitts der Abstand der Abstreifelemente von der eigentlichen Abstreifebene des Abstreifbandes bis auf maximal 50%, vorzugsweise bis auf maximal 30% der Länge der Abstreifelemente an. Bei einer Höhe von rund 50% über der Abstreifebene ist ein Eingriff in die gegebenenfalls bereits auf dem Sortierband vorhandene, bereits von Beimengungen wie Kluten oder Steinen getrennte Menge der Hackfrüchte ein Eingriff weitestgehend ausgeschlossen. Als Abstand wird hierbei die lotrechte Strecke von der in Richtung zur Abstreifebene weisenden Spitze eines jeweiligen Abstreifelements hin zur Abstreifebene angesehen.

Die Abstreifebene eines Abstreifbandes entspricht der Ebene, die durch die Linien verläuft, die von den in der Sortierzone im Gemisch wirkenden Enden der Abstreif-elemente gezogen werden und zwar in dem gradlinig über dem Gemisch verlaufenden Teil des Abstreifbandes vor einem etwaig vorhandenen Ausförderabschnitt. Bei unterschiedlich langen Abstreifelementen bildet sich dann eine oder mehrere weitere Abstreifebenen, die dann entsprechend für den Abstand der entsprechend langen Abstreifelemente in der Ausförderzone betrachtet werden. Zum Zwecke der vor- oder nachfolgenden Betrachtung verläuft diese Abstreifebene auch im Ausförderabschnitt (ungekrümmt) weiter.

Insbesondere bei Ausförderabschnitten, die eine konstante Steigung aufweisen und mithin linear ansteigen erfolgt eine gleichmäßige Loslösung der Abstreifelemente von Erntegut, so dass dieses schonend auf dem Sortierband übergeben oder belassen wird.

Je nach Breite des Sortierbandes und Länge bzw. Längsposition des Endes des Abstreifbandes beträgt projiziert auf die Abstreifebene die Länge des Ausförderabschnitts ca. 5 bis 10% der in einer Draufsicht betrachteten Länge des Abstreifbandes.

Zwecks Anpassung an unterschiedliche Erntebedingungen, wechselnde Sortierparameter sowie die jeweiligen Hackfruchtformen kann gemäß einer vorteilhaften Weiterbildung der Erfindung die Steigung des Ausförderabschnitts separat einstellbar sein. Hierfür können zugehörige Umlenkrollen und Stellmittel beispielsweise zwischen Rahmenteilen des Abstreifbandes vorgesehen sein.

Für eine optimale Trennung und optimale Verteilung der Bestandteile des zugeführten Gemisches sind die Längen der zumindest der zwei Abstreifbänder, insbesondere betrachtet in einer Draufsicht unterschiedlich lang. In einer vorteilhaften Ausgestaltung der Erfindung ist das in Zuführrichtung erste und vordere Abstreifband länger ausgebildet als das dahinterliegende zweite Abstreifband. Hierdurch können die Größten der zu sortierenden Hackfrüchte über das längere Abstreifband am besten in den äußersten, vom Zuführband entfernt liegenden Randbereich des Sortierbandes gefördert werden, während kleinere Kartoffeln oder Hackfrüchte durch ein nachfolgendes Abstreifband oder eine nachfolgende Reihe von näher zu der dem Zuführband näherliegenden Seite des Sortierbandes gefördert werden können.

Bei ungewollten Schräglagen des Hackfruchternters und somit des Zuführbandes kann es sein, dass das zugeführte Gemisch einseitig und nicht gleichmäßig über das Zuführband verteilt zugeführt wird. Hierfür, um die maximale Straßenbreite der insbesondere quer zur Fahrtrichtung wirkenden Abstreifbänder zu variieren oder allgemein um die Bearbeitung des zugeführten Gemisches und die Sortierung der getrennten Hackfrüchte besser zu kontrollieren, können die Abstreifbänder in oder gegen deren Förderrichtung einzeln oder gemeinsam und insbesondere auch gegeneinander längsverschiebbar ausgebildet sein. Hierfür sind Längsstellorgane vorgesehen, die direkt am Maschinenrahmen oder einem anderen Rahmenteil, beispielswiese des Trenngerätes und als Teil der Tragvorrichtung angeordnet sind.

Vorzugsweise sind die Abstreifbänder und insbesondere die Tragvorrichtung um eine jeweilige Hochachse verschwenkbar, um den Winkel zwischen Abstreifrichtung und Zuführrichtung im Hinblick auf unterschiedliche Sortierparameter und/oder Bandlaufgeschwindigkeiten einstellen zu können. Die Abstreifbänder können um eine jeweilige oder eine identische Hochachse verschwenkbar ausgebildet sein. Eine Hochachse ist hierbei insbesondere eine zur Abstreifebene senkrechte Achse. Für die Verschwenkung sind Schwenkstellorgane vorgesehen, die insbesondere am Tragrahmen oder an weiteren Teilen der Tragvorrichtung und/oder dem Maschinenrahmen angelenkt sind und an die die Abstreifbänder entsprechend gleichzeitig parallel oder auch unterschiedlich gegeneinander verschenken können.

Insbesondere nehmen die Abstreifbänder mit dem Zuführband einen Winkel zwischen 80° und 145° ein, so dass quer eine Überleitung und Trennung des Gemisches in Richtung des Sortierbandes bzw. eines hierzu vorzugsweise parallel verlaufenden Ausförderers für Beimengungen erfolgt.

Je nach vorhandenem Bauraum und Menge des zu sortierenden und zugeführten Gemisches kann die Sortierzone zwischen Zuführband und Sortierband durch ein die Sortierzone vergrößerndes Zwischenförderband vergrößert werden. Dieses bildet ebenfalls eine Ebene mit Zuführband und Sortierband aus. Sowohl Zuführband als auch Sortierband können bekannte Igel- oder Gumminoppenbänder sein. Die Förderrichtungen von Zuführ-, Zwischenförder- und Sortierband sind vorzugsweise zumindest in einer Draufsicht parallel.

Um über die Länge des Abstreifbandes unterschiedliche Impulse auf das zu sortierende Gut geben zu können, kann die Länge der Abstreifelemente eines Abstreifbandes betrachtet über dessen Erstreckung sowohl in Quer- als auch in dessen Längsrichtung unterschiedliche sein. vorzugsweise ist bei einzelnen Abstreifelementen die Länge maximal auf rund 30% der Länge des längsten Elements reduziert, um beispielsweise bei fingerartigen Abstreifelemente einer Gesamtlänge von 15 bis 25 cm eine entsprechende Verteilung des auf unterschiedlich große Hackfrüchte wirkenden Impulses auf die zu trennenden Hackfrüchte zu besitzen.

Auch der Abstand in Abstreifrichtung hintereinanderliegender Abstreifelemente der eines einzelnes Abstreifbandes oder hintereinander liegender Abstreifbänder ist vorteilhafterweise unterschiedlich groß und insbesondere beim in Zuführrichtung betrachteten hinteren Abstreifband kleiner als beim in Zuführrichtung vorderen Abstreifband. Dies unterstützt im Betrieb der Vorrichtung die bereits vorstehend beschriebene Trennung in unterschiedlich große Fraktionen von Hackfrüchten, so dass die in Zuführrichtung betrachtet hintereinanderliegenden Reihen von Abstreifelementen eine zunehmend geringere Beabstandung voneinander aufweisen und auf dem Sortierband in dessen Längsrichtung betrachtet über die gesamte Breite eine Größenfraktionierung angestrebt werden kann und zumindest teilweise auch erreicht werden kann.

Die Sortierung der Hackfrüchte des von der erfindungsgemäßen Vorrichtung zu bearbeitenden Gemisches ist weiterhin verbessert, wenn in Längsrichtung eines der in dessen abgewinkelten Zustand betrachteten Abstreifbänder zwischen zwei äußeren Abstreifelementen zumindest ein weiteres außermittig angeordnetes Abstreifelement angeordnet ist. Insbesondere ist dieses weitere Abstreifelement dichter und weiter in Richtung der ersten Reihe von Abstreifelementen betrachtet aus Zuführrichtung angeordnet, um einen ersten starken Eingangsimpuls im Betrieb auf das ankommende Gemisch einbringen und etwaig nach einer Siebstrecke noch vorhandene Verklumpungen oder Ansammlungen auflösen zu können. Insbesondere für besonders ertragreichen Gebiete mit entsprechend notwendig hohen Förder- und Sortierleistungen kann es vorteilhaft sein, wenn aufgrund der dann bei höheren Ernte- und Rodegeschwindigkeiten zumindest 40% und insbesondere bis zu 60% der zwischen den beiden äußeren Abstreifelementen vorhandenen Breite durch weitere Abstreifelemente abgedeckt ist. Diese können unterschiedlich hoch sein, so dass ein zu starker Impuls auf kleine Fraktionen im zugeführten Gemisch vermieden wird.

Ausgehend von den eingangs vorbeschriebenen und als Stand der Technik aufgezeigten Strukturen bekannter Kartoffelerntemaschinen ist die vorbeschriebene im Bereich zumindest einer ihrer Sortierzonen insbesondere mit einem das Erntegut erfassenden Trenngerät versehen, das nunmehr in einer bevorzugten Ausführung durch unterschiedlich auswählbare Einstellparameter im Bereich der zumindest zwei Abstreifbänder - im Bereich des zumindest einen Zuführbandes - auf variierende Gemische und/oder Konsistenzen des Förderstroms reagieren kann.

Ausgehend von den zwei Abstreifbändern - mit nebeneinander angeordneten Abstreifebenen - ist vorzugsweise vorgesehen, dass diese beiden Abstreifbänder jeweils einzeln einstellbar in das System integriert werden. Dazu werden diese als autarke Baugruppen zu einer Quer-Abstreif-Einheit verbunden, die mittels zumindest einer Tragvorrichtung oberhalb des als Gemischförderer wirkenden Zuführbandes vorgesehen ist.

Diese Einzelverstellmöglichkeiten im Bereich der Abstreifbänder sind darauf gerichtet, dass die jeweiligen Abstreifelemente der umlaufenden Abstreifbänder unterschiedliche Zugriffslagen oberhalb des Zuführbandes einnehmen können. Damit kann das in einem Arbeitsspalt zwischen den Abstreifbändern jeweilige horizontale Abstreifebenen bildende System so eingestellt werden, dass dem darunter mit dem umlaufenden Zuführband eingeführten Gemisch aus Knollen, Steinen und Kluten unterschiedliche Abstreif- und Mitnahmebewegungen vermittelt werden. Dabei wirken die Abstreifelemente - auf Grundlage jeweiliger variabler Eingriffswinkel und/oder Eingriffstiefen - vorteilhaft so auf das Erntegut ein, dass diesem definierte Förderimpulse verliehen werden, der quer gerichtete Abtransport aus dem Gemisch heraus zum nebengeordneten Sortierband hin erfolgt und die Beimengungen weitgehend unbeeinflusst weitergeleitet werden.

Dabei kann bereits eine unterschiedlich einstellbare Höhenlage der Abstreifelemente über dem Zuführband für eine gestufte Aussortierung von großen und weniger großen Knollen des Erntegutes genutzt werden - gleichzeitig bleiben die kleineren, schweren Kluten und Steine auf dem umlaufenden Zuführband und werden mit diesem seitlich zu einer Leitrichtung ausgefördert.

Außerdem ist vorzugsweise vorgesehen, dass eine einen "keilförmigen" Arbeitsspalt bildende Ausrichtung der Abstreifebenen der beiden Paare von Abstreifelementen - durch deren Lageveränderung in Relation zur "horizontalen" Zuführebene - auch dazu führen kann, dass die kleineren sowie härteren Strukturen von Kluten oder Steinen auf das Zuführband gedrückt werden und diese Teile in der insbesondere um 90° zur Abstreifrichtung versetzten Leitrichtung zu einem Abfallband o. dgl. Ausförderer hin gezielt weitergeleitet werden.

Es versteht sich, dass das einstellbare System der beiden Abstreifbänder insbesondere weitere unterschiedliche Einstellvarianten ermöglicht, wobei die Abstreifelemente des jeweiligen Abstreifbandes einzeln oder paarweise sowohl in variierenden Höhen-Abständen als auch Winkellagen zum Zuführband der Sortierzone positioniert werden können und dabei variierende Abstreifebenen in dieser Bänder-Kreuzungs-Struktur aufgebaut sind.

Eine konstruktiv verbesserte Umsetzung dieses Einzel-Einstellsystems sieht vor, dass die Abstreifbänder auch eine gemeinsame Stützverbindung aufweisen können, in deren Bereich dann eine gleichzeitige Einstellung bzw. Verstellung der durch die Abstreifelemente gebildeten Abstreifebenen möglich ist.

Eine bevorzugte Ausführung der Konstruktion im Bereich der gemeinsamen Tragvorrichtung sieht vor, dass die jeweiligen Abstreifebenen der beiden Abstreifbänder in deren Querrichtung auf veränderbare Kippwinkel eingestellt werden können. Daraus ergibt sich, dass die an den Abstreifbändern vorhandenen Abstreifelemente in Form von Fingern oder Borsten bei der Veränderung des Kippwinkels des Abstreifbandes "mitbewegt" werden. Damit können die vorbeschriebenen Förder- und Übernahmebedingungen im Bereich des Arbeitsspaltes zwischen Zuführband und Abstreifbändern vergleichsweise einfach verändert und die Abstreifbedingungen schnell an sich ändernde Förderströme angepasst werden.

Es hat sich gezeigt, dass im Bereich der die "Band-Kreuzung" aufweisenden Sortierzone bereits eine Variation der Sortierbedingungen dadurch erreicht werden kann, dass die Abstreifebenen der beiden Abstreifbänder jeweils einzeln in ihrem parallelen Höhenabstand zum Zuführband auf gleiche oder unterschiedliche Abstände eingestellt werden. Dabei kann insbesondere auch ein "stufenförmiger" Übergang - mit unterschiedlich hohen Abstreifebenen - im Bereich des Arbeitsspaltes erreicht werden. Daraus resultiert, dass die Sortierbedingungen im Bereich von absatzartigen "Profilierungen" im Bereich der vom Trenngerät überdeckten Förderstrecke bzw. Sortierzone beeinflusst werden.

Ausgehend von bekannten Ausführungen der Abstreifbänder sind diese vorzugsweise mit jeweils zwei Reihen umlaufender Abstreifelemente versehen. Diese beiden Reihen von Fingerstrukturen werden bei der Einstellung des jeweiligen Abstreifbandes insbesondere gemeinsam verlagert.

Für die konstruktive Umsetzung des Systems mit einzeln verstellbaren Abstreifbändern sind unterschiedliche Stellmöglichkeiten denkbar. Dabei kann die optimale Struktur insbesondere auch von dem verfügbaren Einbauraum abhängen, so dass die wahlweise Ausführung von beispielsweise Stellmotoren oder Stellzylindern mit entsprechenden Stellgliedern denkbar ist. In jedem Fall ist vorgesehen, dass die Abstreifbänder im Bereich der "zweiteiligen" Tragvorrichtung jeweils zumindest ein motorisches Stellorgan mit Stellglied aufweisen. Durch entsprechende Stützbauteile als Verbinder zum Maschinenrahmen hin wird mittels einzeln einleitbarer Stellbewegungen die wahlweise Höhenverstellung oder eine Veränderung der Kipplage an den beiden Abstreifbändern ermöglicht.

In bevorzugter Ausführung sind die beiden Abstreifbänder jeweils in einem seitliche Tragplatten aufweisenden Rahmengestell gehalten. In deren Bereich ist jeweils zumindest ein Stellantrieb in Form eines Hydraulikmotors o. dgl. vorgesehen. Damit kann ein Hubzylinder o. dgl. Stellorgan eine entsprechende Stellmechanik so bewegen, dass die beiden unabhängigen Einstellungen der beiden Abstreifbänder vornehmbar sind.

Eine vorteilhafte Ausführung dieser Tragkonstruktion sieht vor, dass die beiden Abstreifbänder im Bereich der zentralen Stützverbindung über ein gemeinsames Drehgelenk zusammenwirken. Durch eine dieses Drehgelenk beeinflussende Verlagerung können die beiden Abstreifbänder gleichzeitig in eine jeweilige gegensinnig oder gleichsinnig verlaufende Kipplage bewegt werden. Dabei ist im Bereich dieses Drehgelenkes vorteilhaft eine Rückstellmechanik, beispielsweise mit einer Rückstellfeder, vorgesehen, so dass eine weitgehend selbsttätige Rückverlagerung der beiden Abstreifbänder in die zum Zuführband parallele Ausgangslage möglich ist.

Das Gesamtkonzept des neuen Trenngerätes sieht vor, dass dieses im Bereich der beiden Abstreifbänder mit nur drei Stützverbindungen zum Maschinenrahmen hin abgestützt sein kann. Dabei ist vorgesehen, dass insbesondere im Bereich von drei Stellorganen eine Drei-Punkt-Abstützung mittels jeweiliger Halteteile aufgebaut wird. Damit ist eine vorteilhaft stabile und verwindungssteife Festlegung des Trenngerätes im Maschinenrahmen erreicht.

Weitere Einzelheiten und vorteilhafte Ausgestaltungen der Erfindung ergeben sich aus der nachfolgenden Beschreibung und den Zeichnungen, die mehrere Ausführungsbeispiele der mit einem erfindungsgemäß verbesserten Trenngerät versehenen Kartoffelerntemaschine veranschaulichen. In der Zeichnung zeigen:
- Fig. 1: eine Prinzipdarstellung der Förderstrecken in einer Kartoffelerntemaschine gemäß dem Stand der Technik,
- Fig. 2: eine vergrößerte Ausschnittsdarstellung eines in der Maschine gemäß Fig. 1 einsetzbaren Trenngerätes gemäß dem Stand der Technik,
- Fig. 3 und Fig. 4: jeweilige Prinzipdarstellungen des Trenngerätes gemäß Fig. 2 mit den Stellmöglichkeiten gemäß dem Stand der Technik,
- Fig. 5: eine Prinzipdarstellung ähnlich Fig. 4 mit einem bevorzugten Trenngerät eines erfindungsgemäßen Hackfruchternters und den einzelnen Stellmöglichkeiten des Trenngerätes im Bereich der beiden Abstreifbänder,
- Fig. 6: eine Prinzipdarstellung ähnlich Fig. 5 mit einem bevorzugten Trenngerät eines erfindungsgemäßen Hackfruchternters, wobei die beiden Abstreifbänder in einer gleichsinnigen Kippstellung angeordnet sind,
- Fig. 7: eine Prinzipdarstellung ähnlich Fig. 6 mit einem bevorzugten Trenngerät eines erfindungsgemäßen Hackfruchternters, wobei die Abstreifbänder in einer gleichsinnig nach außen gerichteten Kippstellung angeordnet sind,
- Fig. 8: eine Prinzipdarstellung ähnlich Fig. 5 mit einem bevorzugten Trenngerät eines erfindungsgemäßen Hackfruchternters, wobei ein Abstreifband gekippt und ein Abstreifband höhenverlagert ist,
- Fig. 9: eine konstruktive Ausführung des Trenngerätes gemäß dem erfindungsgemäßen Prinzip in Fig. 5,
- Fig. 10: eine Vorderansicht des Trenngerätes gemäß dem erfindungsgemäßen Prinzip in Einbaulage über dem Zuführband ähnlich Fig. 9, und
- Fig. 11: eine perspektivische Ansicht der Sortierzone mit über dem Zuführband in Schrägstellung vorgesehenem Trenngerät gemäß dem erfindungsgemäßen Prinzip,
- Fig. 12: eine Seitenansicht eines Teils einer erfindungsgemäßen Vorrichtung,
- Fig. 13: den Gegenstand nach Fig. 12 in einer Draufsicht,
- Fig. 14: den Gegenstand nach Fig. 13 in einer weiteren Betriebsstellung,
- Fig. 15: den Gegenstand nach Fig. 14 in der Ansicht nach Fig. 12,
- Fig. 16: eine Ansicht in Abstreifrichtung eines Teiles eines erfindungsgemäßen Gegenstands.

Gleichwirkende Elemente sind mit identischen Bezugsziffern versehen. Einzelne Merkmale der nachfolgend beschriebenen Ausführungsbeispiele der Erfindung können in Kombination mit den Merkmalen des unabhängigen Anspruchs sowie ggf. weiterer Ansprüche ebenfalls zu erfindungsgemäßen Gegenständen führen.

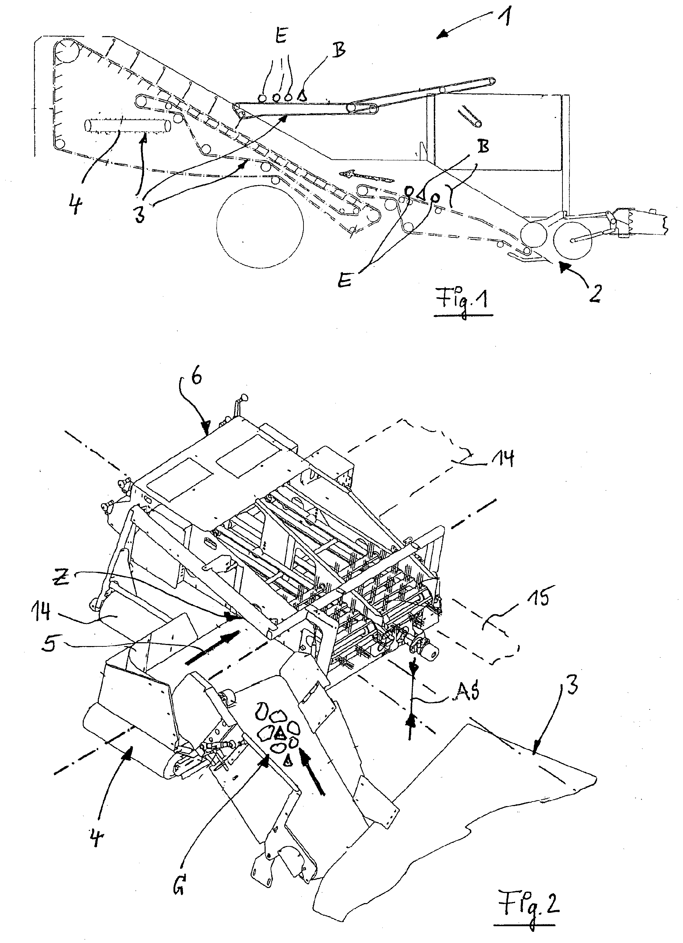

In Fig. 1 ist ein Hackfruchternter in Form einer Kartoffelerntemaschine 1 in einer Prinzipdarstellung - durch eine Seitenansicht - veranschaulicht. Derartige Kartoffelerntemaschinen 1 weisen eine vordere Rodevorrichtung 2 auf, von der aus ein sowohl das Erntegut E als auch Kluten, Kraut o. dgl. Beimengungen B aufweisendes Gemisch G (Fig. 2) in den Bereich nachgeordneter Siebbänder 3 o. dgl. Transportelemente verlagerbar ist. Dabei gelangt das einem der Zuführbänder 4 zugeführte Gemisch G entsprechend einer Zuführrichtung 5 in eine Sortierzone Z (Fig. 2, verdeckt). In dieser Sortierzone Z kann das Erntegut E mittels eines über dem Zuführband 4 angeordneten sowie quer zu dessen Zuführrichtung 5 auf das Gemisch G einwirkenden Trenngerätes 6 aussortiert werden.

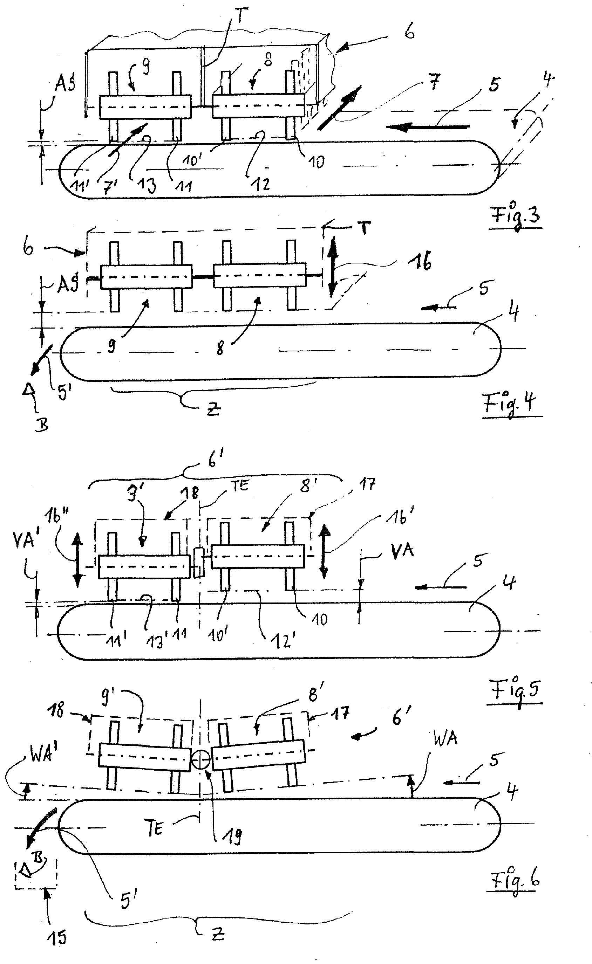

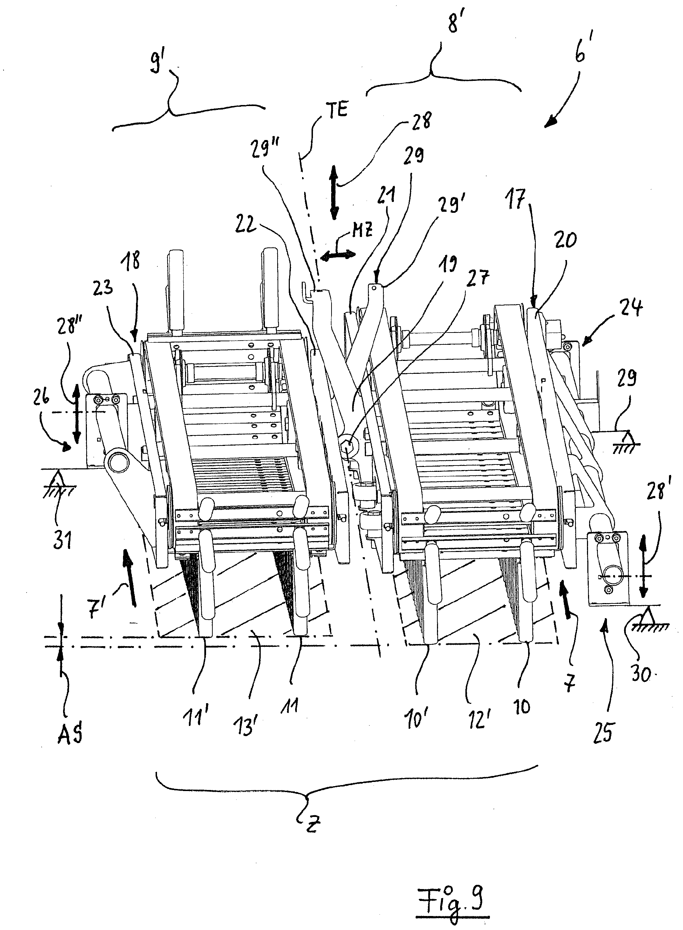

Die bekannten Ausführungen dieser Baugruppen aus Trenngerät 6 und Zuführband 4 (DE 10 2007 034 446 A1) weisen dabei zwei gleichsinnig in einer jeweiligen Abstreifrichtung 7, 7' (Fig. 3) umlaufende Abstreifbänder 8 und 9 auf, die mittels jeweiliger Abstreifelemente 10, 10' sowie 11, 11' das Erntegut E erfassen. Damit werden zwei in Zuführrichtung 5 nebeneinander bzw. nacheinander angeordnete Abstreifebenen 12 und 13 (Fig. 3) definiert. Von diesen aus wird das weitgehend von Kluten B befreite Erntegut E einem nachgeordneten Sortierband 14 (Fig. 2) zugeführt. Dabei können als Abstreifelemente 10, 10' sowie 11, 11' wahlweise Fingerbänder (Fig. 9) oder Bürstenbänder (nicht dargestellt) eingesetzt werden, um entsprechend den Erntebedingungen auf das Verhältnis von Beimengungen B und Erntegut E im Gemisch G eine Voreinstellung vorzunehmen.

Jeweilige als Rest auf dem Zuführband 4 verbleibende Beimengungen B, insbesondere in Form von Steinen und Kluten, werden in einer vorzugsweise um 90° zur Abstreifrichtung 7 versetzten Leitrichtung 5' (Fig. 6) einem seitlichen Ausförderer 15 zugeführt. Die beiden Abstreifbänder 8, 9 weisen dabei eine gemeinsame Stützstruktur T als Tragvorrichtung auf, so dass ausgehend von der einen Arbeitsspalt AS bildenden Lage (Fig. 3) eine gemeinsame Verstellung so möglich ist, dass in Hubrichtung 16 eine Variation des Arbeitsspaltes AS möglich ist (Fig. 4).

Ein bevorzugtes Konzept der Erfindung sieht vor, dass das Trenngerät 6 ausgehend von der in Fig. 2 bis Fig. 4 dargestellten Ausführung des Standes der Technik - mit gleichzeitig verlagerbaren und höhenverstellbaren Abstreifbändern 8, 9 (Pfeilrichtung 16, Fig. 4) - nunmehr eine Konstruktion aufweist, bei der die beiden Abstreifbänder 8', 9' im Bereich zumindest einer diese jeweils haltenden Tragvorrichtung jeweils einzeln einstellbar sind (Fig. 5 bis Fig. 8 - Prinzipdarstellungen).

Das bevorzugte Konzept mit der Einzelverstellung von Baugruppen sieht vor, dass die Abstreifelemente 10, 10' und 11, 1 1' des jeweiligen Abstreifbandes 8', 9' mittels jeweiliger einzeln in Pfeilrichtung 16' und 16" wirkender Stellverbinder in weitgehend variable "vertikale" Abstände VA und VA' (Fig. 5) zum Zuführband 4 verlagerbar sind. Ebenso ist vorgesehen, dass die allgemein mit WA und WA' bezeichneten Winkellagen durch entsprechende Einzelverstellungen der Abstreifbänder 8', 9' variiert werden können (Fig. 6). Damit wird deutlich, dass die beiden Abstreifbänder 8', 9' zum Zuführband 4 hin - im Bereich der Sortierzone Z - jeweils einzeln einstellbare und stufenlos variierende Positionen aufweisen können.

Die Abstreifbänder 8', 9' definieren entsprechend deren Einstellung im Bereich der Sortierzone Z einen jeweiligen Arbeitsspalt AS mit variablen Abmessungen und/oder Konturen (Fig. 5 bis Fig. 8), so dass das Gemisch G unterschiedlichen Sortierbelastungen ausgesetzt wird. Diese sind insbesondere an die feldspezifischen Erntebedingungen anpassbar.

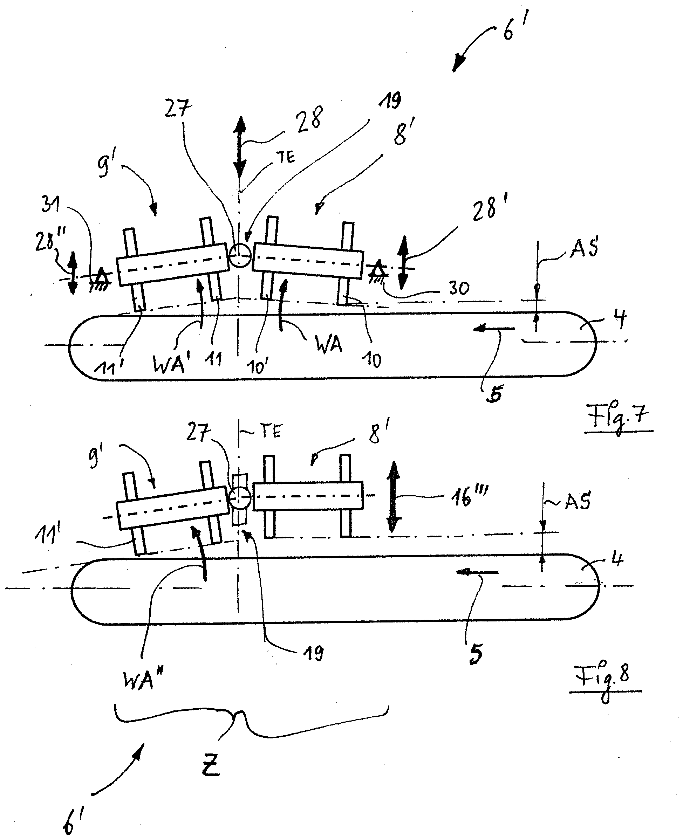

Aus den Darstellungen gemäß Fig. 6 und Fig. 7 wird deutlich, dass die jeweiligen Abstreifebenen 12', 13' der Abstreifbänder 8', 9' in deren jeweiliger Querrichtung auf veränderbare Kippwinkel entsprechend den Pfeilen WA und WA' einstellbar sind. Die konstruktive Gestaltung der Stellverbinder ist so ausführbar, dass die Abstreifbänder 8', 9' jeweils gleichsinnig in oder entgegen dem Uhrzeigersinn (Fig. 6, Fig. 7) geschwenkt werden können. Ebenso ist denkbar, ein gegensinnig schwenkendes System (ähnlich: Fig. 8, Schwenkung gemäß Pfeil WA", Hub 16"') zu realisieren.

Aus der Darstellung gemäß Fig. 5 wird deutlich, dass die Abstreifebenen 12', 13' der beiden Abstreifbänder 8', 9' jeweils einzeln in ihrem parallelen Abstand zum zugeordneten Zuführband 4 eingestellt sind (Abstände VA und VA'). Eine kombinierte Kipp-Hub-Verstellung ist aus Fig. 8 ersichtlich, wobei das Abstreifband 8' in Hubrichtung 16'" verlagert ist und das Abstreifband 9' in einer Kipprichtung WA" so verschwenkt ist, dass der zuvor vergrößerte Arbeitsspalt durch die außenseitigen Abstreifelemente 11' verkleinert wird. Damit wird auch deutlich, dass die Kontur des für das Gemisch G vorgesehenen Arbeitsspaltes AS jeweils unterschiedliche Strukturen aufweist. Eine gestufte Ausführung ist in Fig. 5 gezeigt, sich verengende und erweiterte Ausführungen zeigt Fig. 6, einen "inneren" Formbogen bildet die Ausführung gemäß Fig. 7, und auch die Variante mit kontinuierlich zunehmender Verengung gemäß Fig. 8 ist mit variablen Abmessungen des Arbeitsspaltes AS denkbar.

In den dargestellten Ausführungen ist jeweils vorgesehen, dass die beiden Abstreifbänder 8', 9' jeweils zwei Reihen umlaufender Abstreifelemente 10, 10' und 11, 11' aufweisen, wobei diese beiden Reihen bei den jeweiligen Einstellungen des Arbeitsspaltes AS (Fig. 5 bis Fig. 8) jeweils gemeinsam zu verlagern sind. Denkbar ist auch eine Erweiterung des bevorzugten Konzeptes, wobei auch variable Ausführungen von Länge und Anzahl der Abstreifelemente und/oder deren jeweilige Einzelverstellung denkbar ist (nicht dargestellt).

Aus einer Zusammenschau der Darstellungen gemäß Fig. 6 bis Fig. 8 wird deutlich, dass die beiden Abstreifbänder 8', 9' zu deren gleichzeitiger Einstellung eine zentrale Stützverbindung 19 aufweisen. Dabei sind die beiden Tragvorrichtungen 17, 18 im Bereich einer Teilungsebene TE verbunden.

Aus einer Zusammenschau der Prinzipdarstellungen gemäß Fig. 5 bis Fig. 8 mit den konstruktiven Detailausführungen gemäß Fig. 9 bis Fig. 11 wird deutlich, dass die beiden Abstreifbänder 8', 9' jeweils als Tragvorrichtung 17, 18 einen Tragrahmen aufweisen, der mit Seitenplatten 20, 21 und 22, 23 versehen ist. Dabei ist vorgesehen, dass die benachbarten Seitenplatten 21 und 22 zumindest die eine Stützverbindung 19 bilden. Diese Tragkonstruktion ist dadurch komplettierbar, dass an den beiden äußeren Seitenplatten 20 und 23 jeweils zumindest eine Stützverbindung mit Stellorgan 24, 25, 26 vorgesehen ist.

Damit wird eine Konstruktion geschaffen, bei der die beiden Abstreifbänder 8', 9' im Bereich der zentralen Stützverbindung 19 bei jeder Stellbewegung geführt sein können und gleichzeitig die vorbeschriebenen Einzelverstellungen der Abstreifbänder 8', 9' mittels der äußeren Stellorgane 24, 25, 26 wahlweise steuerbar sind.

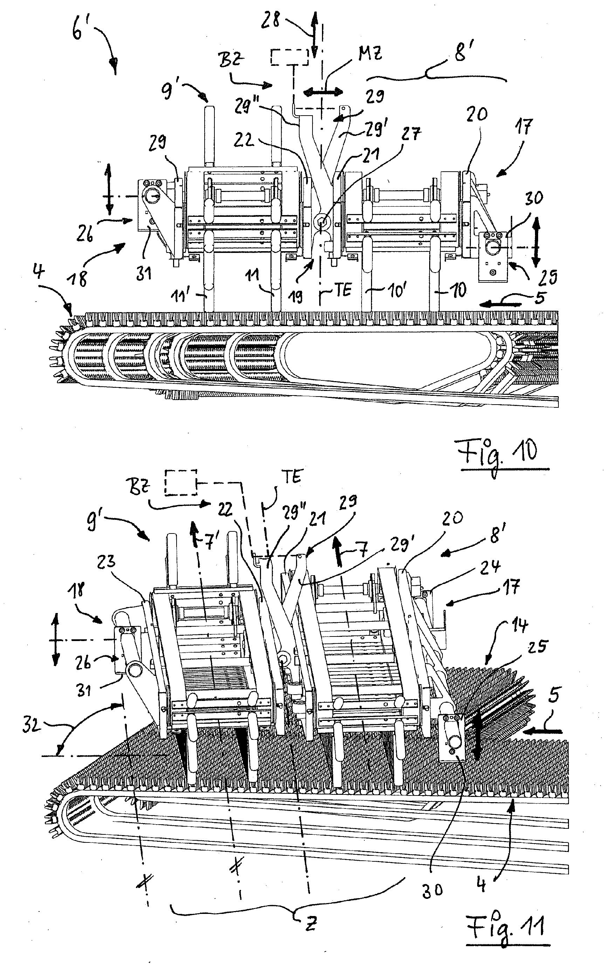

Aus den Darstellungen wird deutlich, dass die Abstreifbänder 8', 9' im Bereich der zentralen Stützverbindung 19 insbesondere mit einem Drehgelenk 27 zusammenwirken können. Dieses Drehgelenk kann - dargestellt bei der Ausführung gemäß Prinzipbild Fig. 7 - in einer Hubrichtung 28 verlagert werden, so dass die in Fig. 7 dargestellte gleichzeitige Verlagerung der beiden Abstreifbänder 8', 9' in Schwenkrichtung WA, WA' erreicht wird. Zur Rückverlagerung in die - vorzugsweise parallel zum Zuführband 4 verlaufende - Ausgangslage (Fig. 10) kann im Bereich des Drehgelenks 27 eine nicht näher dargestellte Mechanik 29, beispielsweise mit einer Rückstellfeder, vorgesehen sein. Damit ist unabhängig von den zur Hubverlagerung 28 vorgesehenen Stellorganen auch eine weitgehend selbsttätige Rückverlagerung der Baugruppen in die Ausgangslage denkbar.

Die Hubbewegung 28 wird dabei im Bereich der Mechanik 29 gesteuert, deren im Drehgelenk 27 kreuzweise verbundene Arme 29' und 29" mit einer Stellbaugruppe BZ (Fig. 10) verbindbar sind. Durch eine Zugbewegung MZ wird die Bewegungskomponente gemäß Hubrichtung 28 ausgelöst. Gleichzeitig ist eine Höhenverstellung gemäß Pfeil 28', 28" (Fig. 7) im Bereich der ortsfesten Stützverbinder 30, 31 steuerbar, so dass die mit den Schwenkrichtungen WA, WA' angegebenen Kippstellungen der beiden Abstreifbänder 8', 9' stufenlos erreichbar sind.

In Fig. 9 ist mit konstruktiven Details eine denkbare Ausführung des bevorzugten, erfindungsgemäßen Systems dargestellt. Dabei wird deutlich, dass das Trenngerät 6' vorzugsweise mit nur drei Stützverbindungen 29, 30, 31 im Bereich der Stellorgane 24, 25, 26 versehen sein kann. Damit wird eine vorteilhafte Drei-Punkt-Abstützung zum nicht näher dargestellten Maschinenrahmen der Erntemaschine 1 hin gebildet. Diese weist damit ein hinreichend verwindungssteifes System in der Sortierzone 7 auf, so dass mit vergleichsweise wenigen Stellbaugruppen eine schnelle Verlagerung der Sortierkomponenten möglich ist.

In Fig. 10 und Fig. 11 ist das System ähnlich Fig. 9 dargestellt, wobei hier die "Kreuzungslage" von Zuführband 4 und Abstreifebenen 12', 13' deutlich wird. In Fig. 11 zeigt eine schräge Draufsicht der Komponenten, dass das Trenngerät 6' in einer spitzwinklig geneigten Position (Winkel 32) über dem Zuführband 4 ausgerichtet ist. Denkbar sind auch weitere, nicht näher dargestellte Variationen dieser Einbaulage des Trenngerätes 6'.

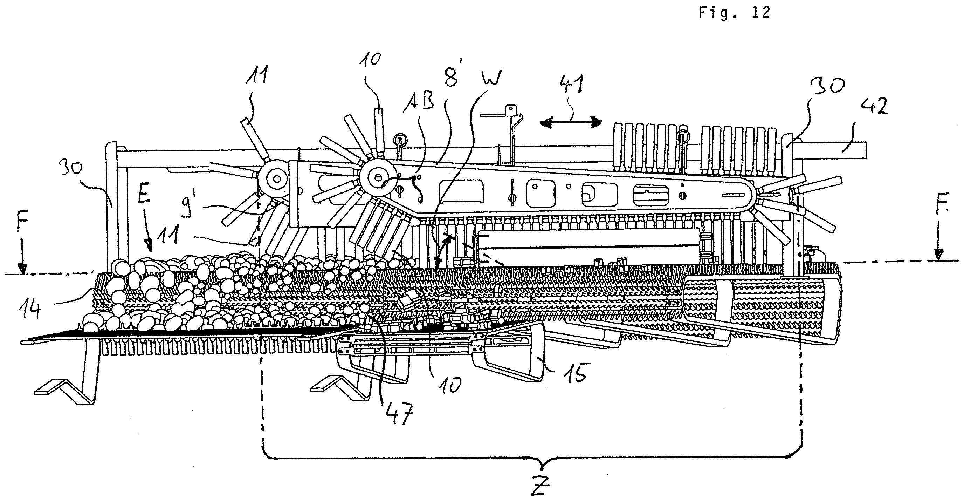

Eine erfindungsgemäße Lösung gemäß Fig. 12 offenbart Abstreifbänder 8' und 9', deren Abstreifelemente 10, 11 (sowie 10' und 11', nicht dargestellt) nur ausschnittsweise dargestellt sind. Die dargestellten Gegenstände des erfindungsgemäßen Ausführungsbeispiels sind ebenso wie die in den vor- und nachbeschriebenen Figuren 5 bis 11 und 13 bis 16 generell Teil einer allgemein in Fig. 1 dargestellten Kartoffelerntemaschine.

Oberhalb der Sortierzone Z verlaufen die Abstreifbänder 8' und 9' in der gezeigten Darstellung nach Fig. 12 zunächst parallel zu einer einheitlichen Förderebene F, die erfindungsgemäß von den durch die Spitzen der der Tragelemente definierten jeweiligen Förderebenen sowohl vom Zuführband 4 wie auch dem Sortierband 14 ausgebildet wird. Senkrecht zur Abstreifrichtung 7 besteht keine Höhedifferenz zwischen den jeweiligen Förderebenen. Durch weiterhin die nebeneinander erfolgte Anordnung der Bänder und den Verzicht auf Fallstufen ist die Sortierung schonender und prozesssicherer ausgebildet. Beide Abstreifbänder 8' und 9' weisen zu ihrem jeweiligen Ende hin gegenüber dem Parallelverlauf des Bandes angewinkelte Ausförderabschnitte AB auf. In diesen Abschnitten AB ist das Abstreifband 8' bzw. Abstreifband 9' nach einer initialen Umlenkung mit einer konstanten Steigung dergestalt versehen, dass die Abstreifelemente 10, 11 im Betrieb graduell und kontinuierlich aus dem Sortiergut herausgenommen werden, ohne dass es zu einem aufgrund der Umlenkung zu starken Impuls in Richtung der Seite des nachgeordneten Sortierbandes 14 kommt.

Die Steigung der Abstreifbänder im jeweiligen Ausförderabschnitt ergibt sich durch den dargestellten Winkel W zwischen der Kontur des Zugelements des Abstreifbandes 8' bzw. 9' und der Abstreifebenen 12',13', die vorliegend mit der Förderebene 7 zusammenfallen.

Ähnlich wie die vorherigen bevorzugten Ausführungsbeispiele der Erfindung weist das Ausführungsbeispiel nach Fig. 12 ortsfeste Stützverbinder 30 auf, die beispielsweise an einem nicht dargestellten Maschinenrahmen befestigt sind. An diesen Stützelementen sind in Richtung des Doppelpfeils 41 verschiebbare Führungsstangen 42 gelagert, über die die Abstreifbänder 8' und 9' entsprechend der durch den Doppelpfeil angedeuteten Richtungen 41 verschoben werden können.

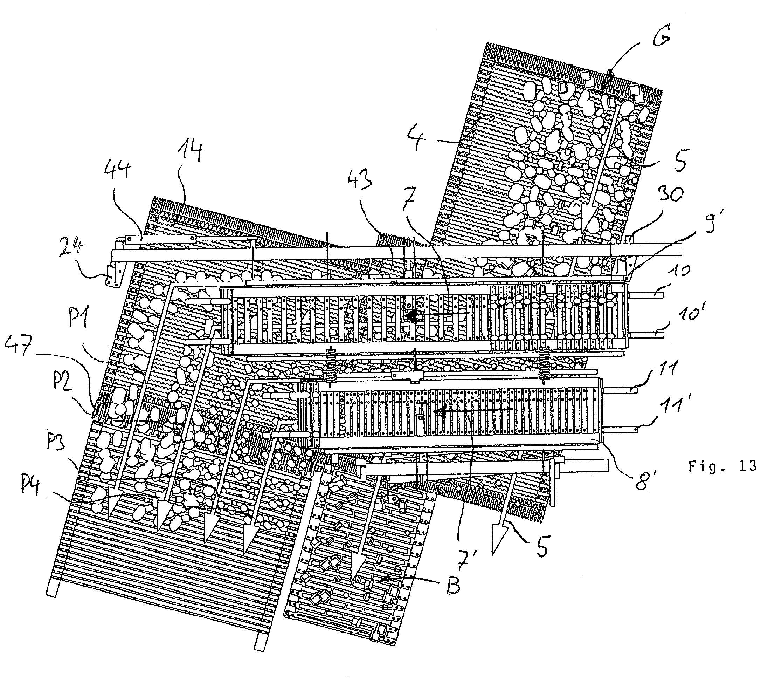

Die Abstreifbänder 8' und 9' sind unterschiedlich lang ausgebildet, wobei das Abstreifband 8 mit zugehörigen Rahmenelementen dergestalt parallel verschoben angeordnet ist zum Abstreifband 9, dass bei einer nicht rechtwinkligen Anordnung der Tragevorrichtung bzw. der Abstreifbänder zum Zuführband die jeweiligen Abstreifelemente 10, 10', 11 und 11' im Betrieb der erfindungsgemäßen Kartoffelerntemaschine beide jeweils in etwa auf Höhe des Randes des Zuführbandes 4 zu wirken beginnen (Fig. 13). Darüber hinaus ist in Kombination mit Fig. 12 erkennbar, der Abstand von in Abstreifrichtung 7 bzw. 7' hintereinanderliegenden Abstreifelemente 10, 10' und 11, 11' unterschiedlich, wobei in Zuführrichtung 5 betrachtet die Abstände der vorderen Abstreifelemente 10 größer als die der Abstreifelemente 11 sind. Darüber hinaus sind in derselben Richtung 5 betrachtet die Abstände und Höhen der Abstreifelemente 10, 10', 11, 11' über der Förderebene so ausgebildet, sei es durch die Länge der unterschiedlichen Finger oder durch die Einstellbarkeit und Schräglage der jeweiligen Abstreifbänder 7, 7', dass sich die auf dem Sortierband 14 dargestellte Fraktionierung ergeben kann. Pfeile P1, P2, P3 und P4 zeigen die entsprechenden Sortierkurven auf Basis der insbesondere unterschiedlichen Sortierparameter umfassend Winkellage WR und WR', Länge und Abstand der Abstreifelemente 10, 10', 11, 11' sowie Positionierung der Abstreifbänder 8' und 9' bezogen auf deren Längsrichtung.

Für eine möglichst gute Sortierung des Gemisches G erfolgt die Umlenkung der Hackfrüchte in einem Winkel >90° zwischen den Richtungen 5 und 7 bzw. 7', so dass die Sortierzone Z verlängert ausgebildet werden kann. Die Sortierzone Z nimmt eine entsprechend große Fläche ein, wobei es vorteilhaft sein kann, ein zusätzliches Zwischenförderband 43, welches als übliches Igel- oder Gumminoppenband ausgebildet sein kann und eine analoge Fördergeschwindigkeit und -richtung zum Zuführband aufweist, vorzusehen.

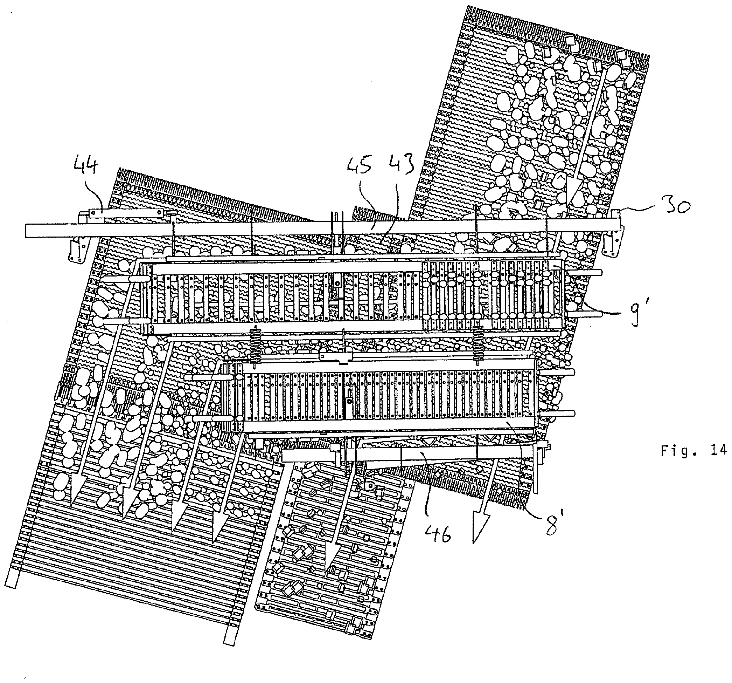

Zwecks weiterer Anpassung an unterschiedliche Sortierparameter kann die gesamte Tragvorrichtung, die die Abstreifbänder 8' und 9' trägt, in einem weiteren, nicht dargestellten Ausführungsbeispiel um eine aus der Figurenebene der Fig. 13 herausragende Hochachse verschwenkbar ausgebildet sein. In diesem Fall wäre der ortsfeste Stützverbinder 30 vorzugsweise an einem Schwenkrahmen festgelegt. Ein an dem zumindest teilweise auch ortsfest festgelegten Stellorgan 24 festgelegtes Längsstellorgan 44 kann eine Verschiebung der Abstreifbänder mit zugehörigen Tragrohren 45 und 46 der Tragvorrichtung bewirken. So können die Abstreifbänder 8' und 9' aus der in Fig. 13 gezeigten Arbeitsstellung in die in der Fig. 14 gezeigte weitere Arbeitsstellung verschoben werden, um unterschiedlichen Erntebedingungen, wechselnden Größenklassenverteilungen und anderen Sortierparametern Rechnung zu tragen. Darüber hinaus kann der Hackfruchternter, der in der Arbeitsstellung gemäß Fig. 13 möglicherweise eine zulässige Straßenbreite überschreitet, über Positionierung des Trenngerätes in die in Fig. 14 dargestellte Position wieder auf eine zulässige Straßenbreite reduziert werden.

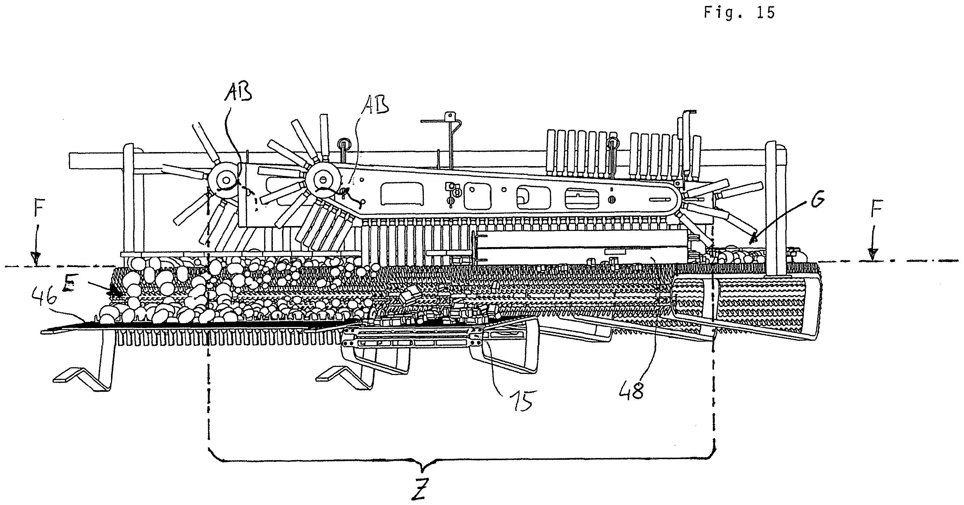

Sowohl das Zwischenförderband 43 wie auch das Zuführband 4 und das Sortierband 14 weisen zueinander parallele Förderrichtungen auf. Darüber hinaus ist betrachtet in einer Seitenansicht gemäß Fig. 15 wie auch Fig. 12 erkennbar, dass diese drei Bänder durch die Sortierzone hindurch eine gemeinsame einheitliche Förderebene F ohne Fallstufen ausbilden. Die durch die jeweiligen oberen Enden der Tragelemente von Zuführ-, Zwischenförder- und Sortierband gebildeten Ebenen gehen direkt ineinander über. Etwaige Zwischenräume zwischen den Bändern sind für das transportierte Gut vernachlässigbar. Zwar werden im Betrieb vom Sortierband 14 aus die Kartoffeln bzw. das Erntegut auf ein etwas niedriger verlaufendes Verlesetischband 46 mittels einer Übergabewalze 47 übergeben. Hierbei wird das Erntegut allerdings nicht im Wesentlichen im freien Fall fallend sondern schräg und aktiv abgefördert, so dass ebenfalls noch eine fallstufenfreie Verlagerung des Ernteguts hin zum Verlesetisch erfolgt. Alternativ könnte das Sortierband 14 auch länger bis hin zum nicht dargestellten Verlesetisch ausgeführt werden. Über einen erfindungsgemäß ausgebildeten Hackfruchternter erfolgt die Sortierung besonders schonend und prozesssicherer.

Ein seitlicher Ausförderer 15 ist zur Abführung gezielt von Querförderwalzen 48 zuführbaren Beimengungen B des Gemisches G vorgesehen.

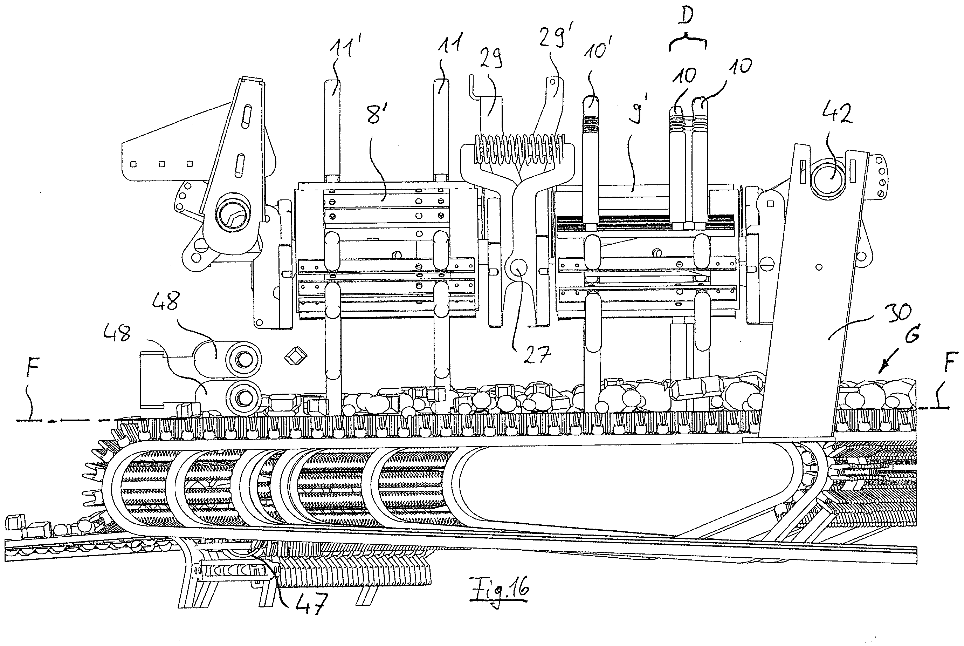

Diese Walzen 48 sind auch in der Fig. 16 in einer Ansicht in Richtung der Abstreifrichtungen 7 bzw. 7' ähnlich den Fig. 5 bis 7 dargestellt. Während das Abstreifband 8' in der betrachteten Richtung lediglich zwei nebeneinander verlaufende Reihen von Abstreifelementen 11 und 11' aufweist, ist das in Zuführrichtung 5 vordere Abstreifband 9' zunächst mit einer Doppelreihe D eng nebeneinanderliegender, gleichwohl in Längsrichtung des Förderbandes versetzt zueinander angeordneten Abstreifelementen 10 sowie einer weiteren Reihe Abstreifelemente 10' versehen. Die Abstreif-elemente 10 einer Doppelreihe D sind darüber hinaus unterschiedlich lang ausgebildet, um auch in unterschiedlichen Höhen optimal auf ankommende Beimengungen B und Erntegut-Bestandteile des Gemisches G einwirken zu können.

Ungeachtet der Darstellungen in den Fig. 12 bis 16, in denen die Abstreifebenen und die Förderebene F parallel zueinander liegen, können durch die bereits erörterten Arme 29 und 29', die über das Drehgelenk 27 miteinander verbunden sind, Relativpositionen der Abstreifbänder 8' und 9' eingestellt werden, um während des Betriebs ohne Austausch von Abstreifelementen oder einzelnen Abstreifbändern auf variierende Gemische und Sortierbedingungen reagieren zu können. So kann beispielsweise bei stark unterschiedlichen Größen das in Zuführrichtung 5 zuerst kommende Abstreifband 9' etwas angewinkelt werden, um im Betrieb den Abstand der Abstreif-elemente 10 zur Förderebene gegenüber den nachfolgenden Abstreifelementen zu vergrößern.

Durch die außermittige Anordnung der beiden Abstreifelemente 10 der Doppelreihe ist insbesondere ein auf dem Zuführband 4 vorhandene Anhäufungen auflösender Impuls erzeugbar.

## Patentansprüche

1. Hackfruchternter, ausgebildet als Kartoffelerntemaschine (1), die mit einer Rodevorrichtung (2) versehen ist, von der aus ein sowohl das Erntegut (E) als auch Kluten, Kraut u. dgl. Beimengungen (B) aufweisendes Gemisch (G) in den Bereich nachgeordneter Siebbänder (3) verlagerbar ist, dabei das auf einem der Zuführbänder (4) aufliegende Gemisch (G) in eine Sortierzone (Z) gelangt und in dieser Sortierzone mittels eines über dem Zuführband (4) angeordneten sowie quer zu dessen Zuführrichtung auf das Gemisch (G) einwirkenden Trenngerätes (6) das Erntegut (E) aussortierbar ist, derart, dass zwei gleichsinnig in einer Abstreifrichtung (7, 7') umlaufende Abstreifbänder (8, 9) mittels jeweiliger Abstreifelemente (10, 10'; 11, 11') das Erntegut (E) erfassen, dieses in zwei nebeneinander angeordneten Abstreifebenen (12, 13) einem nachgeordneten Sortierband (14) zuführen und dabei jeweilige als Rest auf dem Zuführband (4) verbleibende Beimengungen (B) in einer vorzugsweise um 90° zur Abstreifrichtung (7, 7') versetzten Leitrichtung (5') ausleitbar sind, wobei eine Zuführung vom Zuführband zu dem Sortierband (14) und insbesondere zu einem Verlesetisch fallstufenfrei ausgebildet ist, **dadurch gekennzeichnet, dass** die Länge der zumindest zwei Abstreifbänder (8',9') unterschiedlich ist.

2. Hackfruchternter nach Anspruch 1, **dadurch gekennzeichnet, dass** das Sortierband (14) und das zumindest eine Zuführband (4) Förderebenen ausbilden, die vorzugsweise ineinander übergehend eine einheitliche Förderebene F ausbilden und/oder deren Höhendifferenz senkrecht zur Abstreifrichtung (7,7') in einer Seitenansicht betrachtet zumindest weniger als 3 cm, vorzugsweise weniger als 2 cm beträgt.

3. Hackfruchternter nach einem der vorherigen Ansprüche, **dadurch gekennzeichnet, dass** zwischen Zuführband (4) und Sortierband (14) ein die Sortierzone (Z) vergrößerndes Zwischenförderband (43) angeordnet ist.

4. Hackfruchternter nach einem der vorherigen Ansprüche, **dadurch gekennzeichnet, dass** zumindest eines der beiden Abstreifbänder (8', 9') in Förderrichtung vor seiner Umlenkung einen Ausförderabschnitt (AB) aufweist, in dem dieses Abstreifband (8',9') quer zur Förderrichtung betrachtet mit einer Steigung kleiner 55° gegenüber der Abstreifebene versehen ist, wobei das Abstreifband eine abschnittsweise unrunde Kontur und insbesondere konstante Steigung aufweist.

5. Hackfruchternter nach einem der Ansprüche 1 bis 4, **dadurch gekennzeichnet, dass** über die Länge des Ausförderabschnitts der Abstand der Abstreifelemente von der Abstreifebene bis auf maximal 50%, vorzugsweise bis auf maximal 30% der Länge der Abstreifelemente ansteigt.

6. Hackfruchternter nach einem der Ansprüche 4 oder 5, **dadurch gekennzeichnet, dass** die Steigung des Ausförderabschnitts separat einstellbar ist.

7. Hackfruchternter nach einem der vorherigen Ansprüche, **dadurch gekennzeichnet, dass** der Abstand in Abstreifrichtung hintereinander liegender Abstreifelemente (10,10',11,11') der Abstreifbänder (8',9') unterschiedlich groß ist und insbesondere beim in Zuführrichtung betrachtet hinteren Abstreifband (8') kleiner ist als beim in Zuführrichtung (5) vorderen Abstreifband (9').

8. Hackfruchternter nach einem der vorherigen Ansprüche, **dadurch gekennzeichnet, dass** die Abstreifbänder (8',9') und insbesondere die Tragvorrichtung um eine identische oder eine jeweilige Hochachse verschwenkbar sind.

9. Hackfruchternter nach einem der vorherigen Ansprüche, **dadurch gekennzeichnet, dass** die Abstreifbänder (8',9') mit dem Zuführband einen Winkel zwischen 80° und 145° einnehmen.

10. Hackfruchternter nach einem der vorherigen Ansprüche, **dadurch gekennzeichnet, dass** zumindest eines der Abstreifbänder (8',9') in oder gegen dessen Förderrichtung längsverschiebbar ausgebildet ist.

11. Hackfruchternter nach einem der vorherigen Ansprüche, **dadurch gekennzeichnet, dass** die Länge der Abstreifelemente eines Abstreifbandes unterschiedlich ist.

12. Hackfruchternter nach einem der vorherigen Ansprüche, **dadurch gekennzeichnet**, das in Längsrichtung eines in dessen abgewickeltem Zustand betrachteten Abstreifbandes (8',9') zwischen zwei äußeren Abstreifelementen (10,10',11,11') zumindest teilweise ein weiteres Abstreifelement außermittig angeordnet ist.

## Claims

1. Root crop harvester in the form of a potato harvesting machine (1), which is provided with a lifting device (2) from which a mixture (G) comprising both the crop (E) as well as clods, haulm and similar admixtures (B) can be moved into the region of downstream screening belts (3) where the mixture (G) lying on one of the feed belts (4) arrives at a sorting zone (Z) and the crop (E) can be sorted in this sorting zone by means of a separating device (6) disposed above the feed belt (4) and acting on the mixture (G) transversely to the feed direction thereof so that two stripper belts (8, 9) circulating in the same direction in a stripping direction (7, 7') come into contact with the crop (E) by means of respective stripper elements (10, 10'; 11, 11'), feed it in two adjacently disposed stripping planes (12, 13) to a downstream sorting belt (14) and thereby enable respective admixtures (B) remaining on the feed belt (4) as debris to be discharged in a guiding direction (5') offset from the stripping direction (7, 7') by preferably 90°, a feed run from the feed belt to the sorting belt (14) and in particular to a picking table being configured without drop stages, **characterised in that** the at least two stripper belts (8', 9') are of differing lengths.

2. Root crop harvester as claimed in claim 1, **characterised in that** the sorting belt (14) and the at least one feed belt (4) form conveying planes which preferably merge with one another to form a single conveying plane F and/or the height difference thereof perpendicular to the stripping direction (7, 7') seen from a side view is at least less than 3 cm, preferably less than 2 cm.

3. Root crop harvester as claimed in one of the preceding claims, **characterised in that** an intermediate conveyor belt (43) enlarging the sorting zone (Z) is disposed between the feed belt (4) and sorting belt (14).

4. Root crop harvester as claimed in one of the preceding claims, **characterised in that** at least one of the two stripper belts (8', 9') has a discharge section (AB) upstream of its deflection in the conveying direction in which this stripper belt (8', 9') is provided with an incline of less than 55° relative to the stripping plane as viewed transversely to the conveying direction, the stripper belt having a non-round contour in some sections and in particular a constant incline.

5. Root crop harvester as claimed in one of claims 1 to 4, **characterised in that** across the length of the discharge section, the spacing of the stripper elements from the stripping plane increases by up to at most 50%, preferably up to at most 30%, of the length of the stripper elements.

6. Root crop harvester as claimed in one of claims 4 or 5, **characterised in that** the incline of the discharge section is separately adjustable.

7. Root crop harvester as claimed in one of the preceding claims, **characterised in that** the spacing of stripper elements (10, 10', 11, 11') of the stripper belts (8', 9') lying one after the other in the stripping direction differs in size and in particular in the case of the rear stripper belt (8') as viewed in the feed direction is shorter than in the case of the front stripper belt (9') in the feed direction (5).

8. Root crop harvester as claimed in one of the preceding claims, **characterised in that** the stripper belts (8', 9') and in particular the supporting device are pivotable about an identical or a respective vertical axis.

9. Root crop harvester as claimed in one of the preceding claims, **characterised in that** the stripper belts (8', 9') subtend an angle of between 80° and 145° with the feed belt.

10. Root crop harvester as claimed in one of the preceding claims, **characterised in that** at least one of the stripper belts (8', 9') is configured to be longitudinally displaceable in or opposite the conveying direction thereof.

11. Root crop harvester as claimed in one of the preceding claims, **characterised in that** the stripper elements of a stripper belt are of differing lengths.

12. Root crop harvester as claimed in one of the preceding claims, **characterised in that** in the longitudinal direction of a stripper belt (8', 9') as viewed in the flat state thereof, an additional stripper element is eccentrically disposed between two outer stripper elements (10, 10', 11, 11') in at least some parts.

## Revendications

1. Machine de récolte de plantes sarclées, conçue comme une arracheuse de pommes de terre (1), qui est dotée d'un dispositif d'arrachage (2) à partir duquel un mélange (G) présentant aussi bien le produit de récolte (E) que des mottes, des fanes et autres impuretés analogues (B) peut être déplacé dans la zone de bandes de tamisage (3) placées en aval, ce faisant, le mélange (G), qui repose sur l'une des bandes d'amenée (4), parvient dans une zone de tri (Z) et, dans cette zone de tri, le produit de récolte (E) peut être trié au moyen d'un appareil séparateur (6) disposé au-dessus de la bande d'amenée (4) et agissant sur le mélange (G) transversalement par rapport à sa direction d'amenée, de manière telle que deux bandes de raclage (8, 9), qui tournent dans le même sens suivant une direction de raclage (7, 7'), saisissent le produit de récolte (E) au moyen d'éléments de raclage respectifs (10, 10', 11, 11'), amènent celui-ci à une zone de tri (14) située en aval, dans deux plans de raclage (12, 13) disposés l'un à côté de l'autre et, ce faisant, des impuretés respectives (B), qui subsistent sur la bande d'amenée (4) comme résidus, peuvent être évacuées suivant une direction de guidage (5') décalée de préférence de 90° par rapport à la direction de raclage (7, 7'), où une amenée depuis la bande d'amenée jusqu'à la bande de tri (14) et, en particulier, jusqu'à une table de tri, est configurée sans étage de chute, **caractérisée en ce que** la longueur des au moins deux bandes de raclage (8', 9') est variable.

2. Machine de récolte de plantes sarclées selon la revendication 1, **caractérisée en ce que** la bande de tri (14) et l'au moins une bande d'amenée (4) forment des plans de transport qui, en passant l'un dans l'autre, forment de préférence un plan de transport unitaire F et/ou dont la différence de hauteur perpendiculaire à la direction de raclage (7, 7'), considérée dans une vue de côté, est au moins inférieure à 3 cm, de préférence inférieure à 2 cm.

3. Machine de récolte de plantes sarclées selon l'une des revendications précédentes, **caractérisée en ce qu'**une bande transporteuse intermédiaire (43) agrandissant la zone de tri (Z) est disposée entre la bande d'amenée (4) et la bande de tri (14).

4. Machine de récolte de plantes sarclées selon l'une quelconque des revendications précédentes, **caractérisée en ce qu'**au moins l'une des deux bandes de raclage (8', 9') présente une section d'évacuation (AB) se trouvant en amont de son changement de direction dans le sens de transport, section d'évacuation dans laquelle cette bande de raclage (8', 9'), vue de manière transversale par rapport au sens de transport, est dotée d'une pente inférieure à 55° par rapport au plan de raclage, où la bande de raclage présente un contour partiellement non circulaire et, en particulier, une pente constante.

5. Machine de récolte de plantes sarclées selon l'une quelconque des revendications 1 à 4, **caractérisée en ce que**, sur la longueur de la section d'évacuation, l'espacement des éléments de raclage par rapport au plan de raclage augmente jusqu'à 50 % au maximum, de préférence jusqu'à 30 % au maximum de la longueur des éléments de raclage.

6. Machine de récolte de plantes sarclées selon l'une des revendications 4 ou 5, **caractérisée en ce que** la pente de la section d'évacuation peut être réglée séparément.

7. Machine de récolte de plantes sarclées selon l'une quelconque des revendications précédentes, **caractérisée en ce que** l'espacement, dans la direction de raclage d'éléments de raclage (10, 10', 11, 11') des bandes de raclage (8', 9'), qui sont placés les uns derrière les autres, est de grandeur variable et, en particulier dans le cas de la bande de raclage arrière (8') considérée suivant la direction d'amenée, est inférieur à l'espacement de la bande de raclage avant (9') considérée suivant la direction d'amenée (5).

8. Machine de récolte de plantes sarclées selon l'une quelconque des revendications précédentes, **caractérisée en ce que** les bandes de raclage (8', 9') et, en particulier le dispositif de support, peuvent pivoter autour d'un axe vertical identique ou d'un axe vertical respectif.

9. Machine de récolte de plantes sarclées selon l'une quelconque des revendications précédentes, **caractérisée en ce que** les bandes de raclage (8', 9') forment, avec la bande d'amenée, un angle compris entre 80° et 145°.

10. Machine de récolte de plantes sarclées selon l'une quelconque des revendications précédentes, **caractérisée en ce qu'**au moins l'une des bandes de raclage (8', 9') est configurée en étant mobile longitudinalement dans le même sens ou en sens opposé à sa direction de transport.

11. Machine de récolte de plantes sarclées selon l'une quelconque des revendications précédentes, **caractérisée en ce que** la longueur des éléments de raclage d'une bande de raclage est variable.

12. Machine de récolte de plantes sarclées selon l'une quelconque des revendications précédentes, **caractérisée en ce que**, dans la direction longitudinale d'une bande de raclage (8', 9') considérée dans son état développé, un autre élément de raclage est disposé au moins partiellement de façon excentrée entre deux éléments de raclage extérieurs (10, 10', 11, 11').
